# EUROPÄISCHE PATENTSCHRIFT

(11) **EP 1 974 976 B1**
(45) Veröffentlichungstag und Bekanntmachung des Hinweises auf die Patenterteilung: **30.12.2009**
(21) Anmeldenummer: 08005725.0
(22) Anmeldetag: 27.03.2008
(51) Int. Cl.: B60K 15/04

(54) **Einfüllstutzen eines Treibstofftanks mit Schutz vor Fehlbetankung**
Fill supports for a fuel tank guarding against incorrect fuelling
Tubulures de remplissage d'un réservoir de carburant dotées d'une protection contre les problèmes de remplissage de réservoir

(30) Priorität: 27.03.2007 AT 1962007
(43) Veröffentlichungstag der Anmeldung: 01.10.2008
(73) Patentinhaber: Magna Steyr Fuel Systems GesmbH, 8261 Sinabelkirchen (AT)
(72) Erfinder: Feichtinger, Stefan, 8160 Büchl (AT)
(74) Vertreter: Harringer, Thomas

(56) Entgegenhaltungen:
- EP-A- 1 262 355
- EP-A- 1 284 212
- EP-A- 1 712 398
- FR-A- 2 762 807

## Beschreibung

### Gegenstand

Die Erfindung betrifft den Einfüllstutzen eines Treibstofftanks mit Schutz vor Fehlbetankung, bestehend aus einem Stutzenkörper, mindestens einem durch Einführen des Füllrohres vom richtigen Durchmesser gegen Federkraft verschiebbaren Teil, einem drehbaren Ring und von diesem drehbaren Ring betätigten Schließelementen, wobei zwischen dem verschiebbaren Teil und dem drehbaren Ring eine Übertragungsvorrichtung angeordnet ist.

Bei Kraftfahrzeugen mit Dieselmotor ist die Gefahr einer Fehlbetankung groß, weil der Durchmesser des Füllrohres einer Zapfpistole für bleifreies Benzin kleiner als der einer Zapfpistole für Dieselkraftstoff ist. Der richtige Durchmesser ist somit der größere und es geht im Folgenden darum, das Einführen eines kleineren Füllrohres in ein größeres Loch ganz sicher zu verhindern.

### Stand der Technik

Aus der EP 1 284 212 B1 ist es bekannt, im Einfüllstutzen ein in Längsrichtung verschiebbares Rohrstück mit tankseitig einer Einschnürung vorzusehen, deren Durchmesser kleiner als der eines Füllrohres für Dieselkraftstoff, aber größer als der eines Füllrohres für Benzin ist. Dieses Rohrstück wirkt über eine Kulissenführung auf die Schließelemente, entweder direkt auf verschiebbare Schließelemente oder über ein es umgebendes verdrehbares Rohrstück.

Diese Sicherheitsvorrichtung versagt aber bei schrägem Einführen des Füllrohres beziehungsweise lässt sich durch seitliches Anpressen des Füllrohres überlisten. Wegen der für die beiden Rohrstücke nötigen Führungslänge ist der Raumbedarf eines solchen Einfüllstutzens in Längsrichtung erheblich und ist die Anbringung weiterer Einbauten, wie etwa Ventile und Abzweigungen für entweichende Kraftstoffdämpfe schwierig bis unmöglich.

### Aufgabe und Lösung

Es ist somit die der Erfindung zugrunde liegende Aufgabe, einen absolut sicheren Schutz vor Fehlbetankung zu bieten, bei verringerter Einbaulänge und ungehinderter Anbringung zusätzlicher Ventile oder dergleichen.

Erfindungsgemäß wird das mit denn kennzeichnenden Merkmalen des unabhängigen Anspruches erreicht. Die beiden gegenüber angeordneten Schieber sind unabhängig voneinander verschiebbar. Wird nur einer verschoben, oder beide nicht ganz, so bleiben die Schließelemente geschlossen. Nur bei Einführen des "richtigen" Füllrohres und somit gleichzeitiger Einwirkung auf die schrägen Anlaufflächen werden beide Schieber gleichzeitig weit genug verschoben und nur dann werden die Schließelemente geöffnet. Diese selektive Wirkung beruht auf dem starren Bügel, der beide Schieber die Einfüllöffnung umgreifend verbindet, und mit einem der Schieber über eine Kulissenführung zusammenwirkt. Diese und eine weitere Kulissenführung zwischen dem Bügel und dem drehbaren Ring bildet die Übertragungsvorrichtung, die die zwangsläufige Verbindung zwischen den Schiebern und den Schließelementen herstellt.

Dabei bieten die Kulissen den Vorteil, dass durch ihren Verlauf auch ein günstiger Verlauf der Öffnungs- beziehungsweise Schließkräfte erreicht wird. Vorzugsweise verläuft die erste Kulisse bezogen auf die Schieberichtung des zweiten Schiebers schräg und die zweite Kulisse ungefähr in Schieberichtung, also radial (Anspruch 2), und hat der starre Bügel an seinem zweiten Ende einen Bolzen, der mit beiden Kulissen zusammenwirkt (Anspruch 3).

Die Schließelemente können im Rahmen der Erfindung sehr verschieden gestaltet sein (Ansprüche 4 bis 10). Sie können entweder auf eine (hier fälschlich) so genannte Bleifreiklappe einwirken (Ansprüche 4 bis 6), die ein Einführen des falschen Füllrohres verhindert oder das direkt erreichen, ohne Bleifreiklappe (Anspruch 7). Dabei können die Schließelemente verschiebbare Riegel oder verschwenkbare Teile sein. Sind sie verschwenkbare Teile (mindestens zwei oder in größerer Anzahl in der Art einer Irisblende) so kann dazu eine dritte Kulissenführung vorgesehen sein.

### Abbildungen

- Fig.1:: Längsschnitt durch einen erfindungsgemäßen Einfüllstutzen,
- Fig 2:: Längsschnitt nach F-F in Fig. 1,
- Fig 3:: Querschnitt nach M-M in Fig. 2,
- Fig 4:: Querschnitt nach L-L in Fig. 2,
- Fig 5:: Querschnitt nach K-K in Fig. 2,
- Fig 6:: Querschnitt nach J-J in Fig. 2,
- Fig 7:: wie Fig. 2, aber in Sperrstellung,
- Fig 8:: wie Fig. 6, aber in Sperrstellung,
- Fig 9:: Explosionsdarstellung einer abgewandelten Ausführungsform,
- Fig10:: Draufsicht nach X in Fig. 9.

### Beschreibung

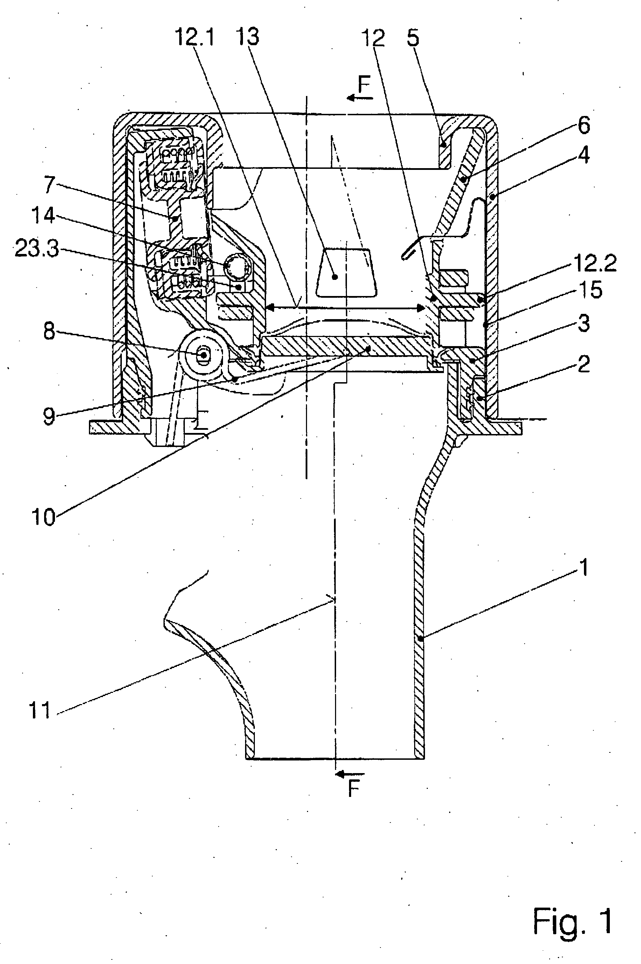

In **Fig. 1** bildet ein Rohrstutzen 1 mit einem Flansch 2, eine Brille 3, ein Aufsatz 4 mit einem Bördelrand 5, und ein nach unten in einen Hohlzylinder 12 auslaufender Einsatztrichter 6 den Stutzenkörper. Die Brille 3 nimmt eine um eine Achse 8 gegen die Kraft einer Haarnadelfeder 9 aufschwenkbare Klappe 10 und seitlich ein Ventil 7, zum Beispiel ein Überdruckventil, auf. Sie (3) und der Aufsatz 4 sind am Flansch 2 befestigt. Der Hohlzylinder 12 dient der Führung eines nicht dargestellten Füllrohres einer Zapfpistole. Das Füllrohr hat den für Dieselkraftstoff genormten Durchmesser, der größer als der eines Füllrohres für bleifreies Benzin ist. Letzteres wird weiterhin als "falsches" Füllrohr bezeichnet. Der Hohlzylinder 12 hat den Durchmesser 12.1, der das "richtige" Füllrohr gerade durchlässt. Weiters ist der Hohlzylinder 12 von einem Flansch 12.2 umgeben, an dem die erfindungsgemäße Vorrichtung zum Schutz vor Fehlbetankung angeordnet ist. Die zugehörige Zugfeder, eine den Hohlzylinder 12 umgebende Schlauchfeder 14, gehört bereits zu dieser Vorrichtung. Ebenso eines der beiden einander gegenüberliegenden Fenster 13 im Hohlzylinder 12. Die gedachte Achse und Einführrichtung eines Füllrohres ist mit 11 bezeichnet. Ein Leiter 15 leitet elektrostatische Ladungen ab.

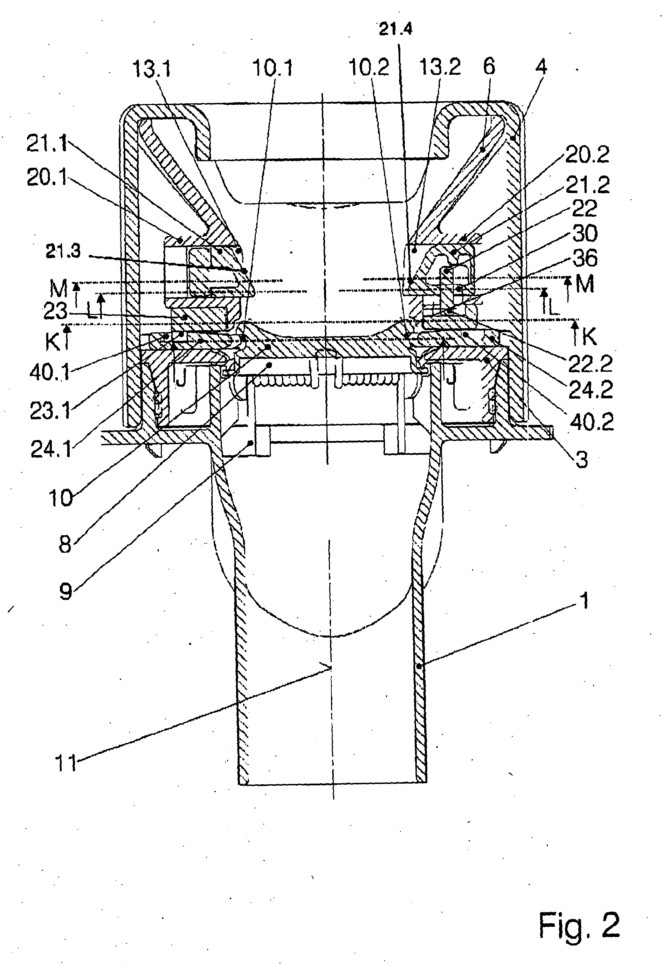

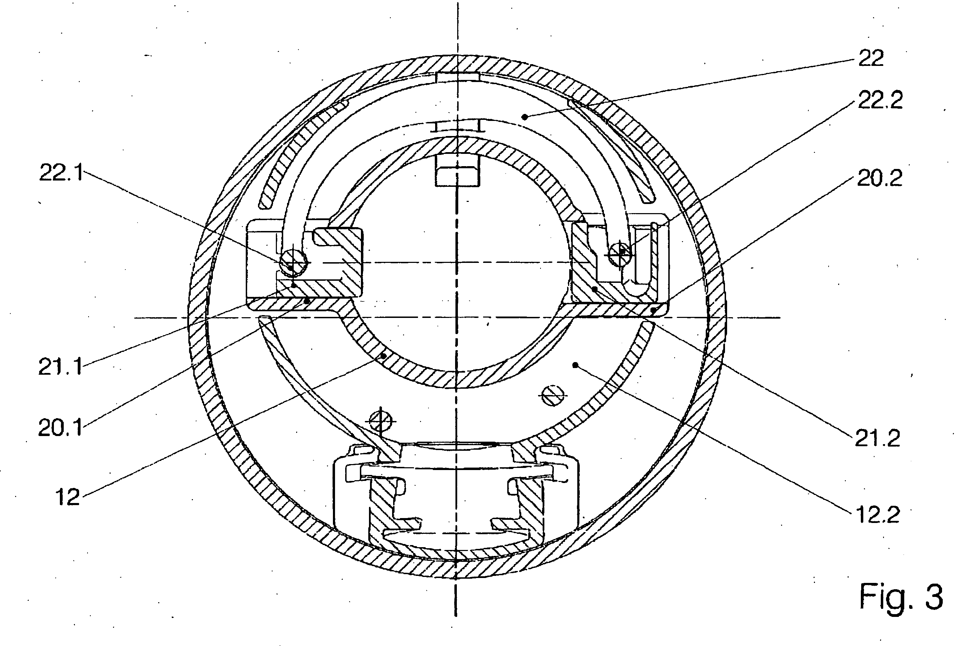

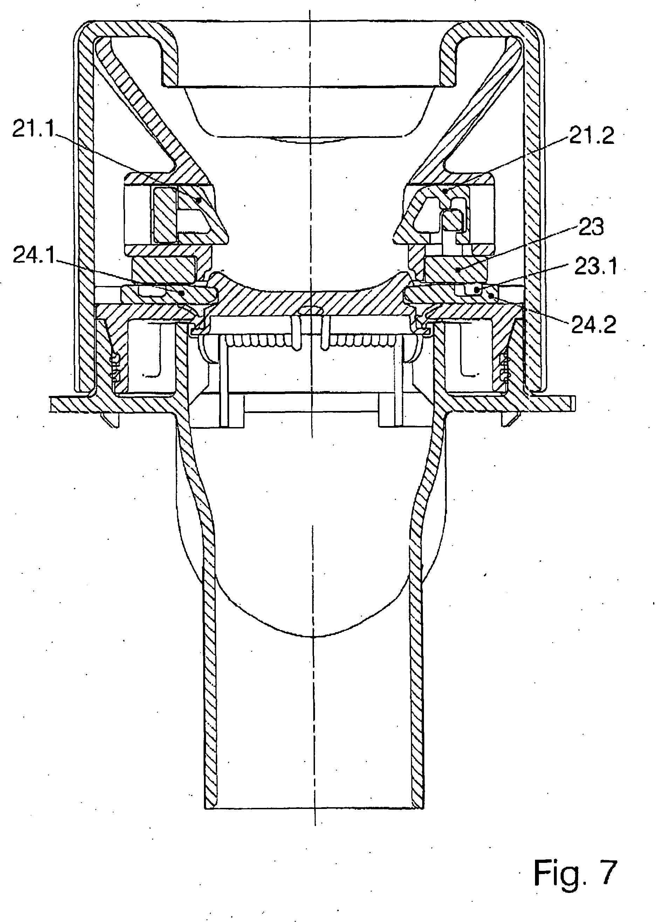

In **Fig. 2** sind die Teile 20-24 der Schutzvorrichtung erkennbar. Ihre Form und ihr Zusammenwirken wird aber erst anhand der Querschnitte in den Fig. 3 bis 6 deutlich, auf die weiter unten eingegangen ist. Die einander gegenüberliegenden Fenster 13.1, 13.2 des Hohlzylinders sind Schiebeführungen 20.1, 24.2, in denen ein erster und ein zweiter Schieber 21.1, 21.2 in einer zur Achse 11 normalen Ebene in radialer Richtung geführt sind. Die Schieber 21.1, 21.2 und ihre Führungen haben einen rechteckigen Querschnitt und schräge Anlaufflächen 21.3, 21.4, die in ihrer Grundstellung (s. Fig. 7) in den Hohlzylinder 12 hineinragen.

Die Schieber 21,1, 21.2 sind mittels eines starren (oder zumindest steifen) Bügels 22 miteinander verbunden, welcher den Hohlzylinder 12 umgreift. Ein Ende des Bügels 22 ist im ersten Schieber 21.1 mittels eines achsparallelen Stiftes 22.1 schwenkbar gelagert; das andere Ende ist mittels eines ebenfalls achsparallelen Bolzens 22.2 im zweiten Schieber schwenkbar und verschiebbar gelagert. Dieser Bolzen 22.2 wirkt mit einem unter den Schiebern 21.1, 21.2 angeordneten drehbaren Ring 23 zusammen, welcher seinerseits wieder mit ebenfalls in einer achsnormalen Ebene darunter liegenden radial verschiebbaren Riegeln 24.1, 24.2 zusammenwirkt, welche Riegel 24.1, 24.2 die Klappe 10 verriegeln.

In **Fig. 3** ist der Hohlzylinder 12 mit den miteinander fluchtenden radialen Schiebeführungen 20.1, 20.2 im Querschnitt zu sehen. Die beiden Schieber 21.1 und 21.2 sind durch den starren Bügel 22 miteinander verbunden. Der Abstand zwischen dem Stift 22.1 an einem, Ende des Bügels 22 und dem Bolzen 22.2 am anderen Ende ist somit konstant. Solange beide Schieber gleichsinnig und gleich weit verschoben werden, ändert sich die Lage des Bügels 22 und damit die der an seinen Enden angebrachten Teile (Stift 22.1 und Bolzen 22.2) bezüglich der Schieber 21.1,21.2 nicht. Das tritt ein, wenn ein "falsches" (zu kleines) Füllrohr eingeführt wird.

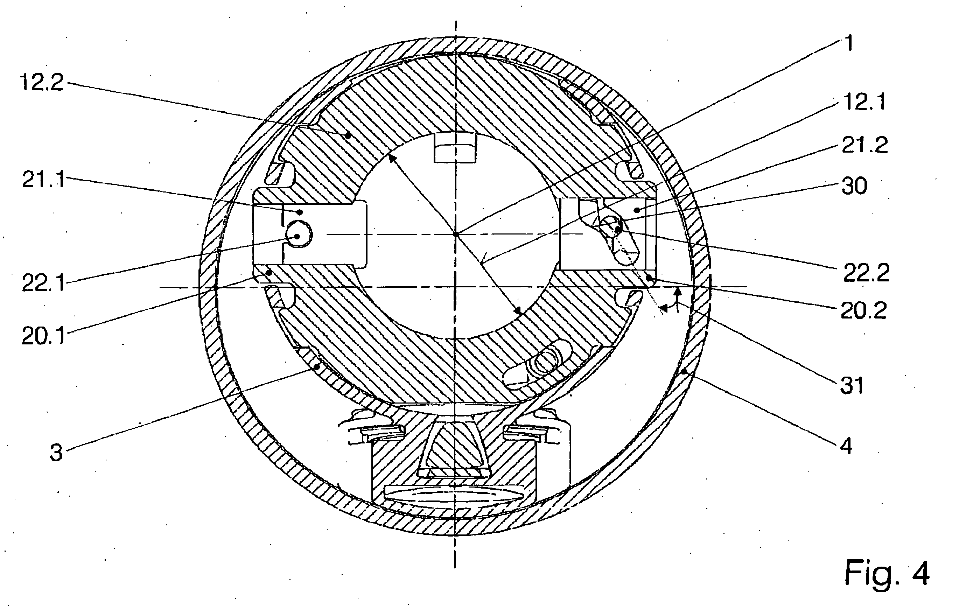

In **Fig. 4** ist zu sehen, wie das andere Ende des Bügels 22 mittels des achsparallelen Bolzens 22.2 im zweiten Schieber 21.2 schwenkbar und verschiebbar gelagert ist. Dazu ist im Schieber 21.2 eine erste Kulisse 30 vorgesehen, in die der Bolzen 22.2 des Bügels 22 eingreift. Die Kulisse schließt mit dem Radius einen Winkel 31 ein. Die Kulisse 30 muss nicht gerade verlaufen; sie kann, wie in Fig. 4 einer Kurve folgen, wodurch der Kraftverlauf in gewünschter Weise verändert wird. Bei Einführen eines Füllrohres mit dem "richtigen" Durchmesser (beinahe 12.1) werden die beiden Schieber 21.1, 21.2 voneinander entfernt. Dabei wird der Bolzen 22.2 des Bügels 22 durch die erste Kulisse 30 in Umfangsrichtung verschoben. Der Bolzen 22.2 ragt durch die Kulisse 30 durch nach unten in den verdrehbaren Ring 23 (siehe Fig. 2) und verdreht ihn um die Achse 11.

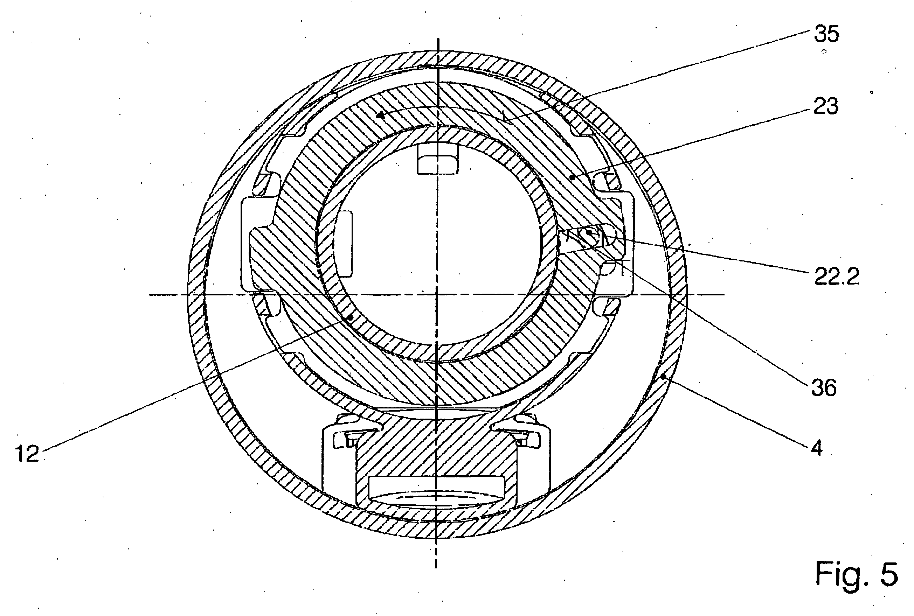

In **Fig. 5** ist das zu sehen. Der verdrehbare Ring 23 umschließt den Hohlzylinder 12, er ist gewissermaßen auf ihm gelagert und wird von dem Bolzen 22.2 verdreht, hier in Richtung des Pfeiles 35. Dazu greift der Bolzen 22.2 in eine zweite Kulisse 36 ein, weil sich seine Entfernung von der Achse 11 bei Bewegung der Schieber 21.1, 21.2 ändert. Die zweite Kulisse 36 verläuft beinahe radial, weil sie diese Verlagerung erlauben muss. Durch die geringe Neigung gegen den Radius sind kinematische Korrekturen möglich. Die in Fig. 1 nur angedeutete Schlauchfeder 14 greift mit ihrem einen Ende am verdrehbaren Ring 23 und mit dem anderen am Hohlzylinder 12 an.

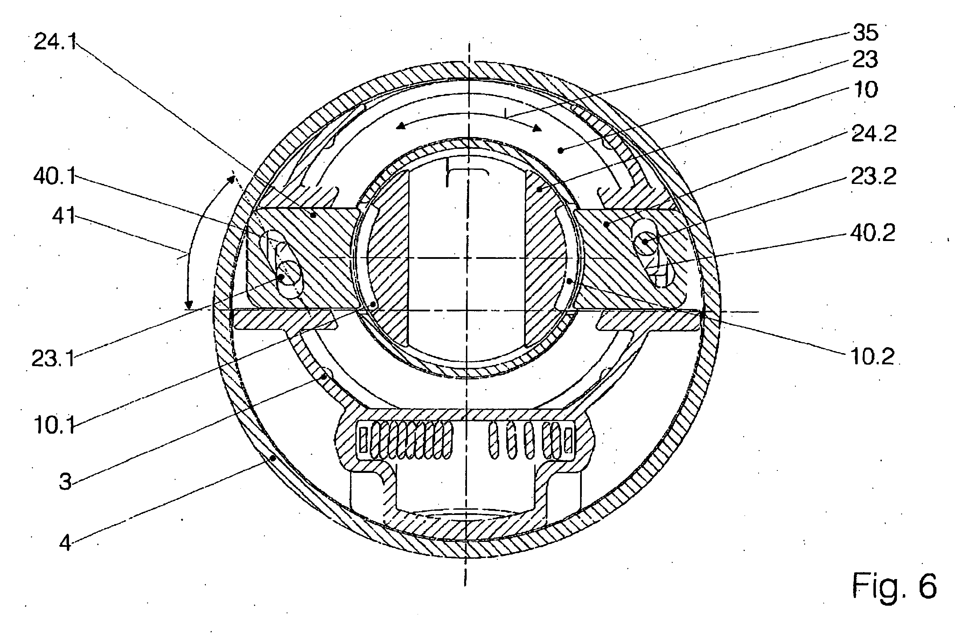

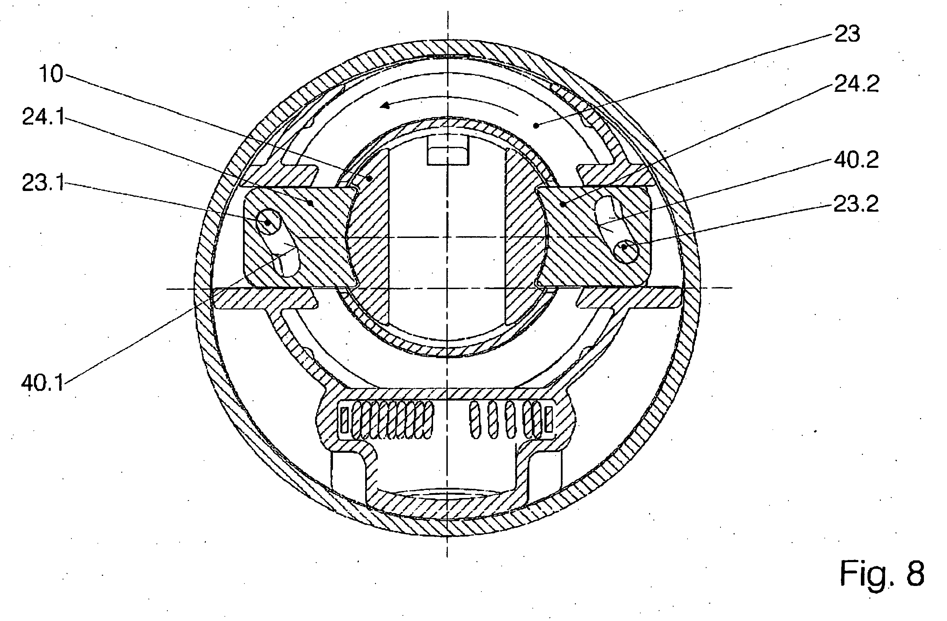

**Fig. 6** zeigt einen Weg, die Verdrehung des Ringes 23 in eine Zugangssperre für ein "falsches" Füllrohr umzusetzen. An der Unterseite des verdrehbaren Ringes 23 sind zwei Stifte 23.1, 23.2 (es könnten auch mehrere sein) angeordnet, die in dritte Kulissen 40.1, 40.2 eines ersten und eines zweiten Riegels 24.1, 24.2 eingreifen. Die Riegel sind an der Brille 3 miteinander fluchtend in radialer Richtung geführt. Sie greifen in geschlossener Stellung (siehe Fig. 8) in Nuten 10.1, 10.2 am Rand der Klappe 10 ein und verriegeln diese. In Fig. 6 ist die Klappe zum Aufstoßen durch das "richtige" Füllrohr freigegeben. Die dritte Kulisse verläuft hier geradlinig unter einem Winkel 41 zum Radius. **Fig. 7** **und** **8** entsprechen den Fig. 2 und 6, sie zeigen dasselbe, jedoch mit verriegelter Klappe 10.

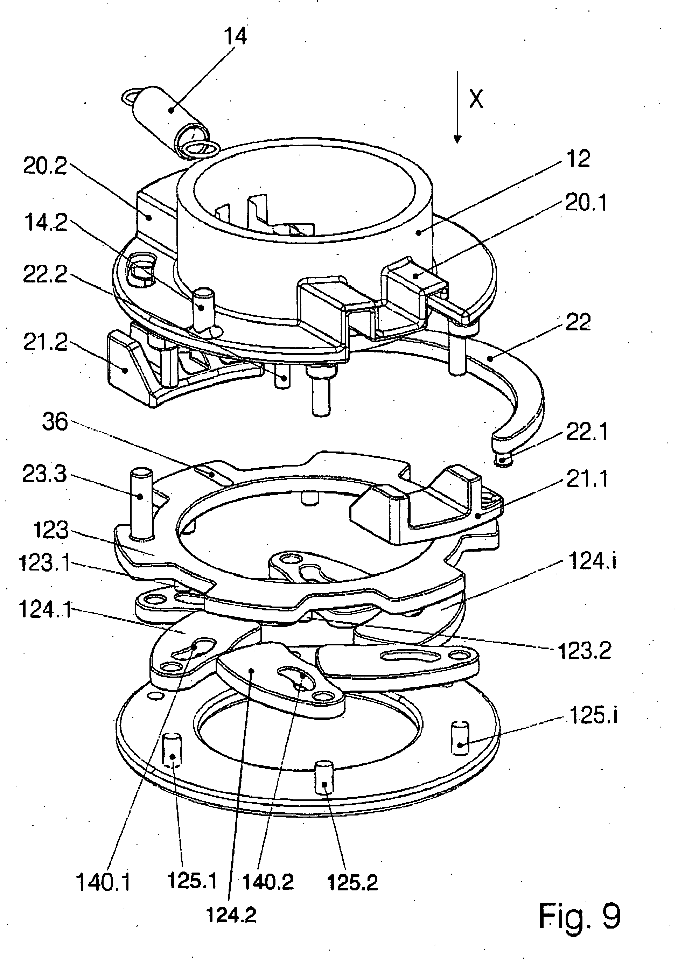

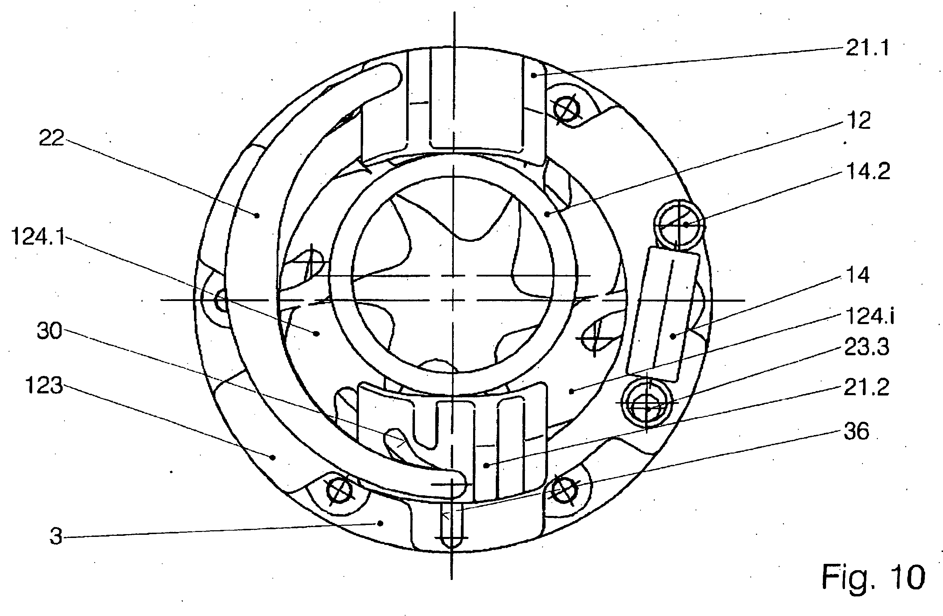

Die Variante der **Fig. 9** **und** **10** unterscheidet sich von der oben Beschrieben nur in dem Weg, die Verdrehung des Ringes 23 in eine Zugangssperre für ein "falsches" Füllrohr umzusetzen. Alle anderen Teile unterscheiden sich nicht und behalten deshalb die Bezugszeichen der Fig. bis 8. Die in Fig. 1 nur angedeutete Schlauchfeder 14 übt zwischen dem Stift 14.2 und dem Stift 23.3 am verdrehbaren Ring 23 eine Umfangskraft aus, die den Ring 23 in die gesperrte Stellung zu bringen trachtet.

Die Bezugszeichen anderer Teile sind um 100 erhöht. In der Explosionsdarstellung der Fig. 9 hat der verdrehbare Ring 123 an seiner Unterseite eine Anzahl von Stiften 123.1, 123.2, 123.i, die in dritte Kulissen 140.1, 140.2, 140.i eingreifen. Diese dritten Kulissen 140.1, 140.2, 140.i sind in um gehäusefeste Achsen 125.1, 125.2, 125.i schwenkbare Teile 124.1, 124.2, 124.i eingefräst. Diese Teile bilden in der dargestellten Anzahl direkt in der Art einer Irisblende wirkende Schließelemente. Sie verriegeln also nicht eine Klappe sondern bilden selbst die Schließelemente.

## Patentansprüche

1. Einfüllstutzen eines Treibstofftanks mit Schutz vor Fehlbetankung, bestehend aus einem Stutzenkörper, mindestens einem durch Einführen des Füllrohres vom "richtigen" Durchmesser gegen Federkraft verschiebbaren Teil, einem drehbaren Ring (23) und von diesem Ring betätigten Schließelementen (24.1, 24.2), wobei zwischen dem verschiebbaren Teil und dem drehbaren Ring (23) eine Übertragungsvorrichtung angeordnet ist, **dadurch gekennzeichnet, dass**
a) im Stutzenkörper (1-6; 12) zwei einander in einer achsnormalen Ebene liegende und verschiebbare Teile (21) im Wesentlichen gegenüber angeordnet sind, welche Teile ein erster und ein zweiter Schieber (21.1, 21.2) mit einander zugewandten schrägen Anlaufflächen (21.3, 21.4) sind, die bei Einführen eines Füllrohres mit dem richtigen größeren Durchmesser eine Verschiebung auswärts erfahren,
b) die beiden Schieber (21.1, 21.2) mittels eines starren Bügels (22) miteinander verbunden sind, welcher starre Bügel mit seinem ersten Ende (22.1) am ersten Schieber (21.1) drehbar und mit seinem zweiten Ende (22.2) am zweiten Schieber (21.2) verlagerbar angelenkt ist,
c) die Übertragungsvorrichtung besteht aus dem starren Bügel (22), einer ersten Kulissenführung (30, 22.2) zwischen dem zweiten Schieber (21.2) und dem starren Bügel (22) und einer zweiten Kulissenführung (36, 22.2) zwischen dem starren Bügel (22) und dem drehbaren Ring (23), wobei die Kulissen (30,36) in der achsnormalen Ebene verlaufen.

2. Einfüllstutzen nach Anspruch 1, **dadurch gekennzeichnet, dass** die erste Kulisse (30) bezogen auf die Schieberichtung des zweiten Schiebers (21.2) unter einem Winkel (31) und die zweite Kulisse (36) ungefähr in Schieberichtung verlauft.

3. Einfüllstutzen nach Anspruch 1, **dadurch gekennzeichnet, dass** der starre Bügel (22) an seinem zweiten Ende einen Bolzen (22.2) hat, der mit beiden Kulissen (30,36) zusammenwirkt.

4. Einfüllstutzen nach Anspruch 1, **dadurch gekennzeichnet, dass** die vom verdrehbaren Ring (23) betätigten Schließelemente (24.1, 24.2) eine Anzahl (vorzugsweise zwei) mit einer tankinnenwärts der Schieber (21.1, 21.2) angeordneten Klappe (14) zusammenwirkende Riegel sind.

5. Einfüllstutzen nach Anspruch 4, **dadurch gekennzeichnet, dass** die Riegel (24.1, 24.2) in einer achsnormalen Ebene in entgegengesetzter Richtung verschiebbare Teile sind, die mit dem verdrehbaren Ring (23) über dritte Kulissenführungen (40.1,40.2, 23.1,23.2) zusammenwirken.

6. Einfüllstutzen nach Anspruch 4, **dadurch gekennzeichnet, dass** die Riegel in einer achsnormalen Ebene um eine gehäusefeste Achse schwenkbare Teile sind, die mit dem verdrehbaren Ring über dritte Kulissenfürungen zusammenwirken.

7. Einfüllstutzen nach Anspruch 1, **dadurch gekennzeichnet, dass** die vom verdrehbaren Ring (123) betätigten Schließelemente (124.i) eine Anzahl in einer achsnormalen Ebene um eine gehäusefeste Achse (125.i) schwenkbare Teile (124.i) sind, die mit dem verdrehbaren Ring (123) über dritte Kulissenführungen (140.i, 123.i) zusammenwirken.

8. Einfüllstutzen nach Anspruch 5 oder 6, **dadurch gekennzeichnet, dass** die dritten Kulissenführungen (40, 23.1) aus einer Kulisse (40.1, 40.2) am Riegel 24.1,24.2) und einem Stift (23.1, 23.2) am verdrehbaren Ring (23) bestehen.

## Claims

1. Filler neck of a fuel tank with an arrangement for preventing incorrect fueling, composed of a neck body, at least one part which can be moved counter to a spring force by inserting the filler pipe of the "correct" diameter, a rotatable ring (23) and closing elements (24.1, 24.2) which are actuated by said ring, with a transmission device being arranged between the movable part and the rotatable ring (23), **characterized in that**
a) two movable parts (21) which are situated and are movable in an axially normal plane are arranged substantially opposite one another in the neck body (1-6; 12), which parts are a first and a second slide (21.1, 21.2) with run-on faces (21.3, 21.4) which face toward one another, which first and second slide (21.1, 21.2) are displaced outward when a filler pipe with the correct size of diameter is inserted,
b) the two slides (21.1, 21.2) are connected to one another by means of a rigid bar (22), which rigid bar is pivotably connected with its first end (22.1) to the first slide (21.1) and movably connected with its second end (22.2) to the second slide (21.2),
c) the transmission device comprises the rigid bar (22), a first slotted guide (30, 22.2) between the second slide (21.2) and the rigid bar (22), and a second slotted guide (36, 22.2) between the rigid bar (22) and the rotatable ring (23), with the slots (30,36) running in the axially normal plane.

2. Filler neck according to Claim 1, **characterized in that** the first slot (30) runs at an angle (31) with respect to the sliding direction of the second slide (21.2), and the second slot (36) runs approximately in the sliding direction.

3. Filler neck according to Claim 1, **characterized in that** the rigid bar (22) has, at its second end, a bolt (22.2) which interacts with the two slots (30,36).

4. Filler neck according to Claim 1, **characterized in that** the closing elements (24.1,24.2) which are actuated by the rotatable ring (23) are a number (preferably two) of locking elements which interact with a flap (14) which is arranged inward toward the tank from the slide (21.1, 21.2).

5. Filler neck according to Claim 4, **characterized in that** the locking elements (24.1,24.2) are parts which are movable in opposite directions in an axially normal plane and which interact with the rotatable ring (23) by means of three slotted guides (40.1,40.2, 23.1,23.2).

6. Filler neck according to Claim 4, **characterized in that** the locking elements are parts which are pivotable in an axially normal plane about an axle which is fixed to the housing, and which interact with the rotatable ring by means of third slotted guides.

7. Filler neck according to Claim 1, **characterized in that** the closing elements (124.i) which are actuated by the rotatable ring (123) are a number of parts (124.i) which are pivotable in an axially normal plane about an axle (125.i) which is fixed to the housing, and which interact with the rotatable ring (123) by means of third slotted guides (140.i, 123.i).

8. Filler neck according to Claim 5 or 6, **characterized in that** the third slotted guides (40,23.1) are composed of a slot (40.1,40.2) on the locking element (24.1,24.2) and a pin (23.1,23.2) on the rotatable ring (23).

## Revendications

1. Tubulure de remplissage d'un réservoir de carburant dotée d'une protection contre les erreurs de remplissage, se composant d'un corps de tubulure, d'au moins une pièce déplaçable contre la force d'un ressort par l'introduction du pistolet de remplissage du diamètre "correct", d'une bague rotative (23) et d'éléments de fermeture (24.1, 24.2) actionnés par cette bague, dans laquelle un dispositif de transmission est disposé entre la pièce déplaçable et la bague rotative (23), **caractérisée en ce que**
a) dans le corps de tubulure (1-6; 12), il se trouve deux pièces (21) déplaçables et situées dans un plan normal à l'axe, disposées sensiblement l'une en face de l'autre, qui constituent un premier et un second coulisseaux (21.1, 21.2) avec des surfaces d'entrée obliques (21.3, 21.4) tournées l'une vers l'autre, qui subissent un déplacement vers l'extérieur lors de l'introduction d'un pistolet de remplissage présentant le plus grand diamètre correct,
b) les deux coulisseaux (21.1, 21.2) sont reliés l'un à l'autre au moyen d'un étrier rigide (22), étrier rigide qui est articulé de façon rotative au premier coulisseau (21.1) par sa première extrémité (22.1) et de façon déplaçable au second coulisseau (21.2) par sa seconde extrémité (22.2),
c) le dispositif de transmission se compose de l'étrier rigide (22), d'un premier guidage à coulisse (30, 22.2) entre le second coulisseau (21.2) et l'étrier rigide (22) et d'un second guidage à coulisse (36, 22.2) entre l'étrier rigide (22) et la bague rotative (23), dans laquelle les coulisses (30, 36) s'étendent dans le plan normal à l'axe.

2. Tubulure de remplissage selon la revendication 1, **caractérisée en ce que,** par rapport à la direction de déplacement du second coulisseau (21.2), la première coulisse (30) s'étend sous un angle (31) et la seconde coulisse (36) s'étend à peu près dans la direction de déplacement.

3. Tubulure de remplissage selon la revendication 1, **caractérisée en ce que** l'étrier rigide (22) comporte à sa seconde extrémité un boulon (22.2), qui coopère avec les deux coulisses (30, 36).

4. Tubulure de remplissage selon la revendication 1, **caractérisée en ce que** les éléments de fermeture (24.1, 24.2) actionnés par la bague rotative (23) forment un nombre (de préférence deux) verrous coopérant avec un clapet (14) disposé sur le côté des coulisseaux (21.1, 21.2) tourné vers l'intérieur du réservoir.

5. Tubulure de remplissage selon la revendication 4, **caractérisée en ce que** les verrous (24.1, 24.2) sont des pièces aptes à se déplacer en sens inverse dans un plan normal à l'axe, qui coopèrent avec la bague rotative (23) par l'intermédiaire de troisièmes guidages à coulisse (40.1, 40.2, 23.1, 23.2).

6. Tubulure de remplissage selon la revendication 4, **caractérisée en ce que** les verrous sont des pièces aptes à pivoter autour d'un axe stationnaire du boîtier dans un plan normal à l'axe, qui coopèrent avec la bague rotative par l'intermédiaire de troisièmes guidages à coulisse.

7. Tubulure de remplissage selon la revendication 1, **caractérisée en ce que** les éléments de fermeture (124.i) actionnés par la bague rotative (123) forment un nombre de pièces (124.i) aptes à pivoter autour d'un axe (125.i) stationnaire du boîtier dans un plan normal à l'axe, qui coopèrent avec la bague rotative (123) par l'intermédiaire de troisièmes guidages à coulisse (140.i, 123.i).

8. Tubulure de remplissage selon la revendication 5 ou 6, **caractérisée en ce que** les troisièmes guidages à coulisse (40, 23.1) sont composés d'une coulisse (40.1, 40.2) sur le verrou (24.1, 24.2) et d'une tringle (23.1, 23.2) sur la bague rotative (23).
